# EUROPÄISCHE PATENTSCHRIFT

(11) **EP 2 219 808 B1**
(45) Veröffentlichungstag und Bekanntmachung des Hinweises auf die Patenterteilung: **14.03.2012**
(21) Anmeldenummer: 08860628.0
(22) Anmeldetag: 10.12.2008
(51) Int. Cl.: B23B 5/16, B23K 11/30

(54) **ELEKTRODENFRÄSWERKZEUG MIT DURCH AUSSPARUNGEN UNTERBROCHENEN FRÄSKANTEN**
ELECTRODE MILLING CUTTER WITH MILLING EDGES INTERRUPTED BY CUT-OUTS
OUTIL À FRAISER LES ÉLECTRODES AVEC DES ARÊTES DE FRAISAGE INTERROMPUES PAR DES CREUX

(30) Priorität: 12.12.2007 DE 202007017307 U; 29.05.2008 DE 202008007251 U
(43) Veröffentlichungstag der Anmeldung: 25.08.2010
(73) Patentinhaber: Lutz Precision, K.S., 821 09 Bratislava (SK)
(72) Erfinder: LUTZ, Peter, Stefan, 81245 München (DE)
(74) Vertreter: Grünecker, Kinkeldey, Stockmair & Schwanhäusser
(86) Internationale Anmeldenummer: PCT/EP2008/010479
(87) Internationale Veröffentlichungsnummer: WO 2009/074306

(56) Entgegenhaltungen:
- FR-A- 2 846 897
- US-A1- 2008 078 749

## Beschreibung

Die Erfindung betrifft ein Elektrodenfräswerkzeug zum Bearbeiten von Punktschweißelektroden und eine Fräseinrichtung zum Nachbearbeiten von abgenutzten Punktschweißelektroden sowie eine Vorrichtung zum Nachbearbeiten von Punktschweißelektroden.

Um Blechteile fest miteinander zu verbinden, werden in Industrieanlagen, wie beispielsweise Automobilherstellungsanlagen, häufig Schweißroboter mit Schweißzangen eingesetzt. Bei einem Schweißvorgang drückt die Schweißzange von zwei gegenüberüegenden Seiten jeweils zwei oder mehrere Blechteile aufeinander, wobei durch in den Zangenarmen der Schweißzange angebrachten Punktschweißelektroden ein elektrischer Strom fließt, so dass die Blechteile punktgenau miteinander verschweißt werden. Die Schließkraft einer Punktschweißzange während des Schweißvorgangs kann bis zu 8 kN betragen. Nach ungefähr 100 bis 300 Schweißvorgängen sind die Punktschweißelektroden derart abgenutzt bzw. mit Schweißresten belegt, dass kein zuverlässiges Verschweißen mehr gut möglich ist.

Die Schweißelektroden weisen in der Regel austauschbare Kappen auf. Sie können jedoch auch einstückig ohne solche Kappen sein. Die folgenden Ausführungen betreffen beide Fälle gleichermaßen, da das Fräswerkzeug, die Fräseinrichtung und die Vorrichtung genauso für einstückige Elektroden wie für Elektroden mit Kappen eingesetzt werden können.

Um die abgenützten Punktschweißelektrodenspitzen wieder in ihre ursprüngliche Form zu bringen, werden besagte Spitzen mit Hilfe eines Elektrodenfräsers nachbearbeitet. Für die Instandsetzung der abgenützten Punktschweißelektroden, die aus relativ weichem Kupfer bestehen, reicht es zumeist aus, weniger als 0,1 mm Material von den Punktschweißelektrodenspitzen abzutragen.

Mit Elektrodenfräsem, wie aus dem Stand der Technik bekannt, wird in der Praxis jedoch das Zwei- bis Dreifache dieser Dicke (0,2 mm bis 0,3 mm) abgetragen. Einerseits führt dies dazu, dass die Kupferelektroden unnötig stark gekürzt werden, so dass die Elektroden bzw. Elektrodenkappen entsprechend schneller komplett ausgetauscht werden müssen. Andererseits führt der unnötig große Abtrag auch dazu, dass die Menge und Größe der abgetragenen Kupferspäne entsprechend zunimmt, wodurch sich die Gefahr eines Zusetzens des Fräswerkzeuges erhöht. Das Austauschen von Punktschweißelektroden bzw. das Reinigen eines Elektrodenfräsers hat üblicherweise zur Folge, dass der gesamte Schweißprozess für längere Zeit unterbrochen werden muss, was zu enormen Folgekosten durch Produktionsausfall oder durch produzierten Ausschuss führt.

Um den Materialabtrag beim Fräsen der Punktschweißelektroden zu verringern, wäre es denkbar, die Schweißzangen, die zum Abfräsen mit den Punktschweißelektroden in die Elektrodenfräseinrichtung greifen, entweder kürzer oder mit geringerem Anpressdruck in die Elektrodenfräseinrichtung greifen zu lassen. In der Praxis ist solch eine Vorgehensweise jedoch nur schwer realisierbar, da sich die Schließzeit von Punktschweißzangen kaum unter 0,7 s reduzieren lässt und somit sich die Fräszeit nicht beliebig verkürzen lässt. Ebenso ist es schwierig, die Schließkraft von 1 bis 2 kN deutlich zu reduzieren, da dies Positionierungsungenauigkeiten zur Folge hatte, wie z. B. dass sich die Schweißarme bei vermindertem Anpressdruck weniger stark durchbiegen, wodurch sich die Orientierung der Wirkflächen zueinander ändert.

Weiter wäre denkbar, die Abtragungsmenge beim Fräsen dadurch zu reduzieren, dass die Drehzahl des Elektrodenfräsers niedriger als die üblichen 200 bis 700 Upm gewählt wird, oder dass der Freiwinkel an der oder den Fräskanten des Fräswerkzeuges unterhalb der bei Buntmetallen üblichen 6° gewählt wird. Beide dieser möglichen Änderungen würde jedoch zu deutlich schlechteren Fräsergebnissen führen, wie z. B. unregelmäßigen Materialabtragungen, Vibrationen beim Fräsvorgang oder schlechtes Zerspanungsergebnis.

Das Dokument FR 2 846 897 A, auf dem der Oberbegriff von Anspruch 1 basiert, zeigt ein Abrichtwerkzeug, insbesondere bestimmt für das Abrichten von Endkappen von Schweißelektroden.

Der nachfolgend beschriebenen Erfindung liegt die Aufgabe zugrunde, die Lebensdauer von Punktschweißelektroden dadurch zu verlängern, dass beim Nachbearbeiten von abgenutzten Punktschweißelektroden nur so viel Material wie nötig (beispielsweise weniger als 0,1 mm) abgetragen wird.

Diese Aufgabe wird gelöst mit einem Elektrodenfräswerkzeug nach Anspruch 1 sowie einer Fräseinrichtung nach Anspruch 12.

Die Ausführungen zu Elektrodenkappen betreffen entsprechend auch Elektroden ohne Kappen und umgekehrt.

Das Elektrodenfiäswerkzeug zum Bearbeiten von Punktschweißelektroden umfasst mindestens eine Fräskante, wie z. B. die Kante eines Metallteiles, die sich erfindungsgemäß dadurch auszeichnet, dass besagte Fräskante an einer oder mehreren Stellen durch eine oder mehrere Aussparungen unterbrochen ist. Die Verwendung solch eines Elektrodenfraswerkzeuges hat zur Folge, dass beim Fräsen an Stellen der Aussparungen ringförmige Wülste an den Punktschweißelektroden entstehen. Dies führt beispielsweise dazu, dass das Punktschweißelektrodenmaterial beim Fräsen dünner abgetragen wird, wodurch sich die Lebensdauer einer Punktschweißelektrode um ein Mehrfaches erhöhen kann. Außerdem führt die Verwendung von Fräskanten mit Unterbrechungen dazu, dass beim Fräsen kleinere Späne bzw. Fräspärtikel erzeugt werden, was die Gefahr des Zusetzens des Fräswerkzeuges stark reduziert. Weiter ermöglichen die ringförmigen Wülste, die beim Fräsen mit dem erfindungsgemäßen Elektrodenfräswerkzeug entstehen, eine genauere Positionierung der Punktschweißelektrodenspitze in dem Elektrodenfräswerkzeug, da die Wülste auf der Elektrode und die Aussparungen etwas ineinander greifen. Schließlich lässt sich an den Positionen der besagten Wülsten erkennen, wann eine Punktschweißelektrode vollständig abgenutzt ist und daher ausgetauscht werden muss.

In einer bevorzugten Ausführungsform der Erfindung beträgt sowohl die Breite als auch die Tiefe der Aussparungen 30 µm bis 110 µm oder maximal 0,5, 1,0 oder 1,5 mm. Je nach Anzahl der Aussparungen pro Fräskante sind jedoch auch größere bzw. kleinere Abmessungen denkbar. Außerdem müssen die Aussparungen einer oder verschiedener Fräskanten nicht unbedingt alle gleich sein, sondern können unterschiedliche Größen haben.

Der Abstand von benachbarten Aussparungen, üblicherweise im Bereich von 1 bis 5 mm, kann jedoch je nach Anwendung größer oder kleiner sein. Die Abstände zwischen jeweils benachbarten Aussparungen können jeweils gleich sein oder variieren.

In einer bevorzugten Ausführungsform der Erfindung wird eine Fräskante durch drei Aussparungen unterbrochen. Bei Elektrodenfräswerkzeugen für sehr kleine Punktschweißelektroden sind jedoch auch nur ein oder zwei Aussparungen möglich und bei Elektrodenfräswerkzeugen für große Punktschweißelektroden kann die Anzahl der Aussparungen pro Fräskante vier oder mehr betragen.

Die konkrete Wahl von Anzahl, Abmessungen und Abständen der Aussparungen hängt hauptsächlich von der Punktschweißaufgabe und dem hieraus resultierenden Verschleiß der Elektroden ab.

Ein weiterer Aspekt des Elektrodenfräswerkzeuges ist, dass sich in dem der Rotationsachse zugewandten Teil der Fräskante keine Aussparungen befinden und besagter Teil üblicherweise mindestens 30% der Gesamtlänge der Fräskante beträgt. Dadurch wird erreicht, dass die Punktschweißelektroden im Bereich der Wirkflächen (Anpressflächen) möglichst glatt sind, so dass durch die Wülste auf den Schweißelektroden keine Änderung des Schweißergebnisses hervorgerufen werden.

Falls das Elektrodenfräswerkzeug mehrere Fräskanten umfasst, bestehen neben der Möglichkeit, gleiche Fräskanten zu verwenden, auch noch die Möglichkeiten, unterschiedliche Fräskanten mit unterschiedlich gestalteten Aussparungen oder einige Fräskanten ohne Aussparungen zu verwenden.

Weiter ist es möglich, dass die Aussparungen entlang einer Fräskante, die Teil eines Fräselementes ist, so gestaltet ist, dass das Fräselement durch die Aussparungen komplett unterbrochen wird. Außerdem sind auch mehrere Fräselemente denkbar, die so aneinander gereiht sind, dass eine ein- oder mehrfach unterbrochene Fräskante entsteht.

Das Elektrodenfräswerkzeug kann weiterhin eine Aufnahmepfanne zur Führung einer zu bearbeitenden Punktschweißelektrode umfassen. In dieser Ausführungsform der Erfindung sind die Fräskanten an oder in der Aufnahmepfanne befestigt.

Es ist möglich, dass sich die Aussparungen teilweise unterhalb der Oberfläche einer entsprechenden Aufnahmepfanne befinden, das heißt, dass ein Teil des Volumens einer Aussparung oberhalb der Oberfläche der Aufnahmepfanne liegt und ein Teil des Volumens besagter Aussparung unterhalb der Oberfläche der Aufnahmepfanne liegt. Weiter ist es möglich, dass der untere Teil einer Aussparung auf gleicher Höhe liegt wie die Oberfläche der Aufnahmepfanne, sodass eine annähernd glatte bzw. ebene Fläche im Bereich besagter Aussparung vorhanden ist. Mit einer derartigen Anordnung der Elemente eines Elektrodenfräswerkzeuges wird erreicht, dass beim Fräsvorgang die zu bearbeitende Punktschweißelektrode im Bereich einer solchen Aussparung direkt auf der Aufnahmepfanne aufliegt. Dadurch ist es möglich, den Materialabtrag einer Punktschweißelektrode beim Fräsvorgang weiter zu verringern.

Typischerweise liegen zirka zwei Drittel des Volumens einer Aussparung unterhalb der Oberfläche einer Aufnahmenpfanne. Das Volumen oberhalb der Oberfläche der Aufnahmepfanne beträgt vorzugsweise mindestens ein Fünftel, ein Viertel, ein Drittel oder die Hälfte des Volumens der Ausnehmung. Das Volumen unterhalb der Oberfläche der Aufnahmepfanne sollte mindestens ein Fünftel, ein Viertel, ein Drittel oder die Hälfte des Volumens der Aussparung betragen Normalerweise weisen alle Aussparungen gleichermaßen diese Eigenschaft auf. Es sind jedoch auch Kombinationen denkbar, bei denen sich einige der Aussparungen komplett oberhalb der Oberfläche, teilweise oberhalb der Oberfläche und auf gleicher Höhe mit der Oberfläche der Aufnahmepfanne befinden. Weiter können die Aussparungen abgerundete bzw. abgestumpfte Kante aufweisen, wodurch ebenfalls eine zusätzliche Reduktion des Materialabtrages einer Punktschweißelektrode beim Fräsvorgang möglich ist.

Weiter ist das erfindungsgemäße Elektrodenfräswerkzeug üblicherweise Bestandteil einer Fräseinrichtung zum Nachbearbeiten von abgenutzten Punktschweißelektroden. Solch eine Fräseinrichtung umfasst normalerweise zusätzlich zum Elektrodenfräswerkzeug einen Antriebsmotor und eventuell ein Getriebe für eine Umdrehungszahl von 200 bis 700 Upm des Fräswerkzeugs. Die Leistung dieses Antriebsmotors liegt typischerweise im Bereich von 0,3 bis 2 kW.

Weiter betrifft die Erfindung eine Vorrichtung zum Bearbeiten von Elektroden unter Verwendung eines der oben oder weiter unten beschriebenen Elektrodenfräswerkzeuge sowie der Fräseinrichtung. '

Außerdem ist es möglich ein Verfahren zum Nachbearbeiten von Punktschweißelektroden, bei dem ein Elektrodenfräswerkzeug oder eine Fräseinrichtung nach einem der vorhergehenden Ansprüche verwendet wird, durchzuführen.

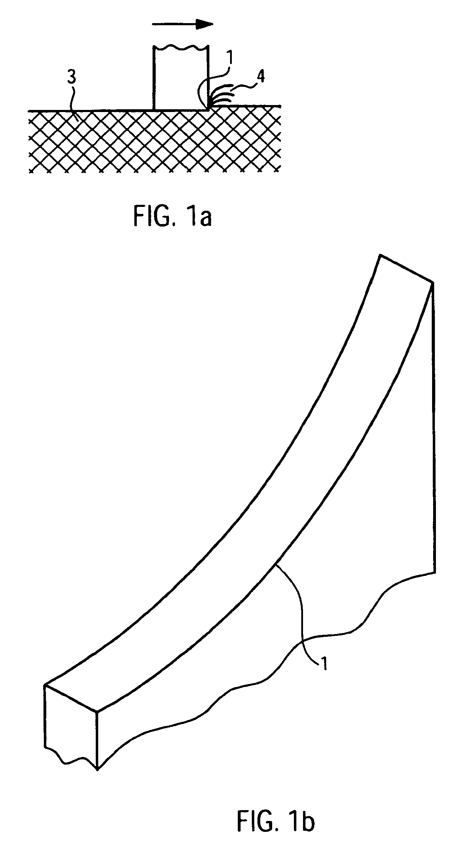

Weitere Aspekte von bevorzugten und möglichen Ausführungsformen der Erfindung werden anhand der Figuren 1 a, 1b, 2, 3, 4, 5, 6, 7a, 7b, 7c, 7d und 7e deutlich. Dabei zeigt:
- Fig. 1 a: eine schematische Ansicht eines Fräsvorganges;
- Fig. 1b: eine schematische Ansicht eines Fräselementes mit (nicht erfindungsgemäßer) Fräskante;
- Fig. 2: eine schematische Ansicht eines Fräselementes mit einer Fräskante, die durch Aussparungen unterbrochen ist;
- Fig. 3: eine schematische Ansicht eines Fräselementes mit einer Fräskante, die durch Aussparungen unterbrochen ist;
- Fig. 4: eine schematische Ansicht eines Fräselementes mit einer Fräskante, die durch Aussparungen unterbrochen ist;
- Fig. 5: eine schematische Ansicht eines Fräselementes mit einer Fräskante, die durch Aussparungen unterbrochen ist;
- Fig. 6: eine schematische Teilansicht eines Elektrodenfräswerkzeuges;
- Fig. 7a: eine schematische Draufsicht eines Elektrodenfräswerkzeuges;
- Fig. 7b: eine schematische Seitenansicht eines Elektrodenfräswerkzeuges mit zu bearbeitender Punktschweißelektrodenspitze;
- Fig. 7c: eine schematische Ansicht eines Wulstes und einer Aussparung in Vergrößerung;
- Fig. 7d: eine schematische Ansicht einer nachbearbeiteten Schweißelektrode; und
- Fig. 7e: eine weitere schematische Seitenansicht eines Elektrodenfräswerkzeuges mit zu bearbeitender Punktschweißelektrodenspitze.

Fig. 1a zeigt schematisch einen Fräsvorgang mit Hilfe einer Fräskante 1, welche in Pfeilrichtung über die Oberfläche des Werkstoffes 3 fortbewegt wird, so dass Werkstoffmaterial, typischerweise in Form von Spänen 4, abgetragen wird. Ein Fräselement mit einer durchgehenden Fräskante 1, wie sie im Stand der Technik verwendet wird, ist in Fig. 1 b skizziert.

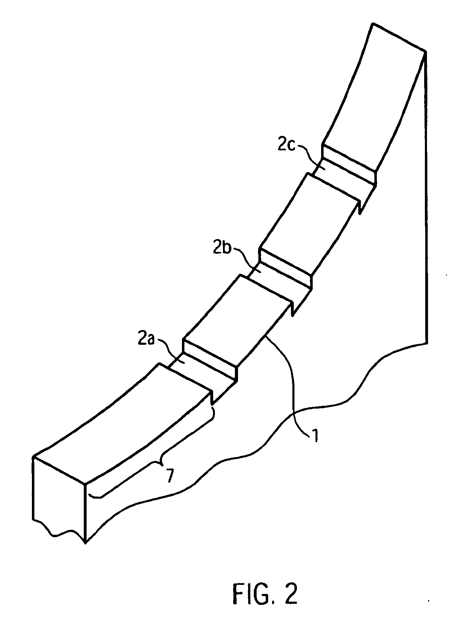

Fig. 2 bis 5 zeigen erfindungsgemäße Fräselemente mit Fräskanten 1, die durch Aussparungen 2 unterbrochen sind.

Die Aussparungen sind hier und in den weitere Figuren mit einem rechteckigen Querschnitt gezeigt. Es sind aber jeweils auch abgerundete oder halbrunde oder andersartig geformte Querschnitte möglich. So kann beispielsweise eine Aussparung einen Querschnitt aufweisen, der aus drei Kreisbogenabschnitten zusammengesetzt ist, sodass zum Beispiel der Querschnitt einer solchen Aussparung in der Mitte konkav und in den Randbereichen konvex geformt ist.

Im Fall von Fig. 2 wird die Fräskante 1 von den Aussparungen 2a, 2b und 2c unterbrochen, welche alle dieselben Abmessungen besitzen und konstante Abstände zu den jeweils benachbarten Aussparungen aufweisen. Weiter ist in Fig. 2 ein Bereich 7 der Fräskante 1 angedeutet, der frei von Aussparungen 2 ist. Typischerweise ist der aussparungsfreie Bereich 7 der Teil der Fräskante 1, der der Mitte des Elektrodenfräswerkzeuges zugewandt ist bzw. der am nächsten an der Rotationsachse des Elektrodenfräswerkzeuges liegt. Das Nichtvorhandensein von Aussparungen im Bereich 7 gewährleistet, dass Punktschweißelektroden im Bereich der Spitze möglichst glatt gefräst werden.

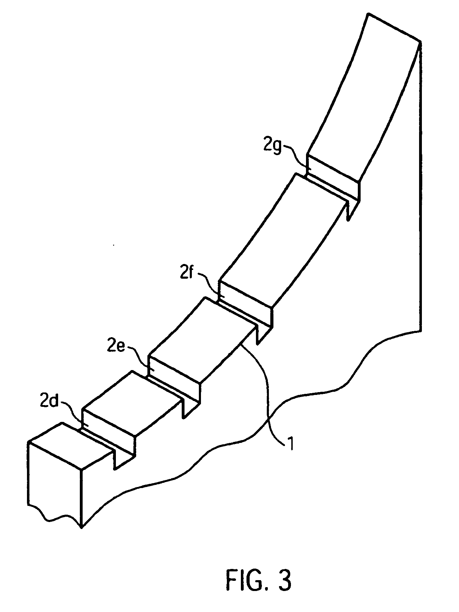

In Fig. 3 ist eine Fräskante 1 mit vier Aussparungen (2d bis 2g) gezeigt, wobei die Abstände zwischen jeweils benachbarten Aussparungen unterschiedlich sind. Durch die Wahl der Abstände wird die lokale Dichte der Aussparungen 2 entlang einer Fräskante 1 festgelegt. Die Dichte der Aussparungen 2 wiederum beeinflusst das Fräsverhalten und die Größe der beim Fräsvorgang entstehenden Späne.

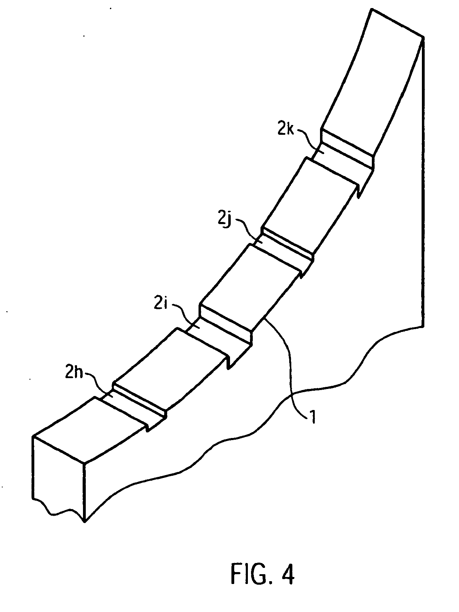

Weiter ist in Fig. 4 der Fall gezeigt, dass die Fräskante 1 durch die Aussparungen 2h bis 2k unterbrochen wird, wobei die Abmessungen der Aussparungen teilweise unterschiedlich und zum Teil identisch sind. Die Abmessungen der Aussparungen 2h und 2j sind untereinander gleich und die Aussparungen 2i und 2k untereinander gleich, jedoch sind Aussparungen 2i und 2k größer als die Aussparungen 2h und 2j. Größere Aussparungen sind beispielsweise dann sinnvoll, wenn an einer zu bearbeitenden Punktschweißelektrode ein besonders ausgeprägter Wulst zur genaueren Positionierung der Punkschweißelektrode in einem Kappenfräswerkzeug entstehen soll.

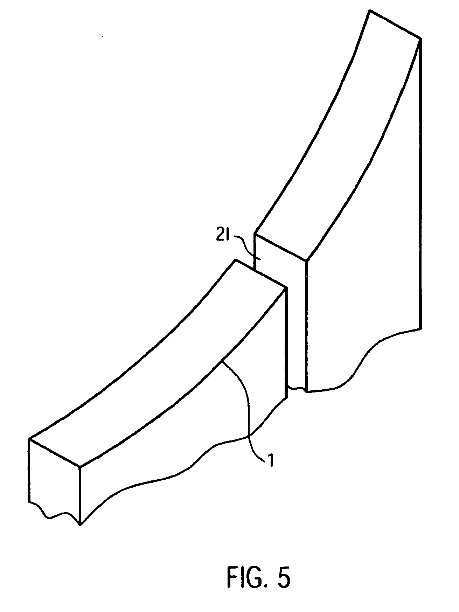

Fig. 5 zeigt ein Fräselement mit Fräskante 1, das durch die Aussparung 21 derart unterbrochen wird, dass das Fräselement in zwei Teile zerfällt. Es ist auch möglich, Fig. 5 so zu interpretieren, dass zwei Fräselemente so angeordnet sind, so dass eine Fräskante 1 entsteht, die durch einen geeignet gewählten Abstand der beiden Fräselemente unterbrochen wird. Weitere Unterbrechungen der Fräskante 1 sind auch im Fall von vollständig unterbrochenen Fräselementen möglich.

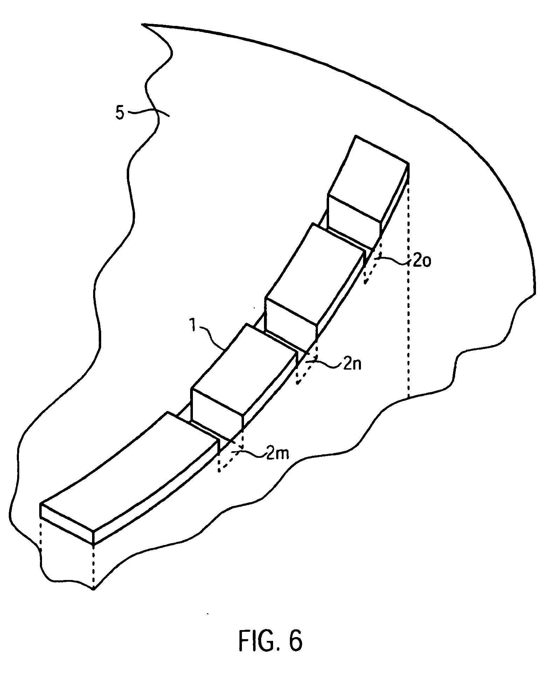

Fig. 6 zeigt eine Teilansicht eines Kappenfräswerkzeuges, bei dem ein Fräselement mit einer Fräskante 1 und Aussparungen 2m, 2n und 2o auf bzw. in einer Aufnahmepfanne so angebracht ist, dass die Fräskante 1 aus der Oberfläche der Aufnahmenpfanne 5 herausragt. Der nicht sichtbare Teil des Fräselements ist durch gestrichelte Linien angedeutet. Wie aus Fig. 6 deutlich wird, liegt ein Teil der Aussparungen 2 unterhalb der Oberfläche der Aufnahmenpfanne 5 (dementsprechend liegt der verbleibende Teil der Aussparungen 2 oberhalb der Oberfläche der Aufnahmenpfanne 5). Es sind jedoch auch Ausführungen möglich, bei denen sich die Aussparungen 2 vollständig oberhalb der Oberfläche der Aufnahmenpfanne 5 befinden. Weiter ist der Sonderfall möglich, dass die unteren Flächen der Aussparungen mit der Oberfläche der Aufnahmenpfanne 5 eine annähernd geschlossene, ebene bzw. glatte Fläche bilden.

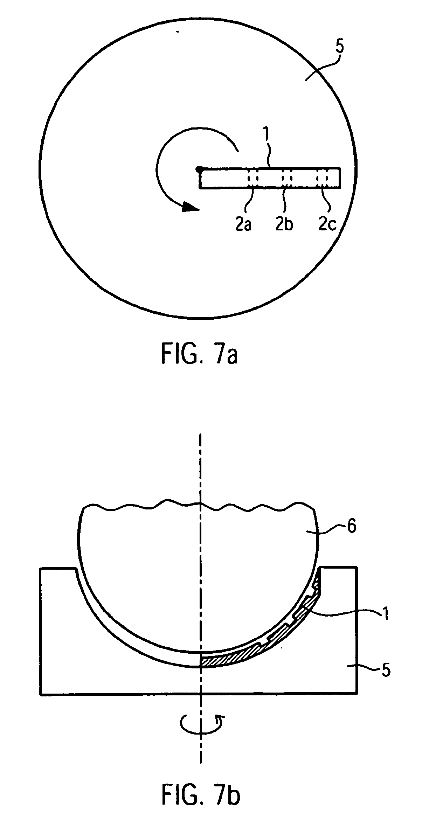

Fig. 7a zeigt eine Draufsicht eines Kappenfräswerkzeuges, bei dem ein Fräselement mit einer Fräskante 1 und Aussparungen 2a, 2b und 2c auf bzw. in einer Aufnahmepfanne so angebracht ist, dass die Fräskante 1 beim Fräsen entgegen dem Uhrzeigersinn um den Mittelpunkt der Aufnahmepfanne 5 rotiert. In Fig. 7b ist die Seitenansicht des Kappenfräswerkzeuges aus Fig. 7a skizziert, außerdem ist in Fig. 7b noch die Spitze einer PunktSchweißelektrode 6 und die Rotationsachse (gestrichelte Linie) angedeutet. Beim Fräsvorgang rotiert das Kappenfräswerkzeug um die Spitze der Punktschweißelektrode 6 (die selbst nicht rotiert), so dass die Fräskante 1 Material von der Spitze der Punktschweißelektrode 6 abträgt. Die Aufnahmepfanne 5 dient hauptsächlich auf der von Fräskante 1 abgewandten Seite zur Führung der Punktschweißelektrode 6. Typischerweise stimmt die Rotationsachse des Kappenfräswerkzeuges mit der Symmetrieachse der zu bearbeitenden Punktschweißelektrode 6 überein.

Das Fräswerkzeug kann auch so ausgebildet sein, dass das Fräselement zwei Fräskanten aufweist, so dass beide Elektroden einer Schweißzange gleichzeitig und mit dem selben Fräselement bearbeitet werden. In Fig. 7b wäre die zweite Fräskante nach unten gerichtet angeordnet. Die Aufnahmepfanne 5 kann dann auch entsprechend für die Aufnahme von zwei Elektroden (in Fig. 7b von oben und von unten) ausgebildet sein (so kann eine weitere etwa halbrunde Vertiefung von unten vorgesehen sein).

Bei der Nachbearbeitung der Elektroden mit dem Elektrodenfräswerkzeug kann die Elektrode mit einer Kraft von 1 kN bis 2,5 kN angedrückt werden. Die Bearbeitungszeit kann zwischen 0,5 und 3,0 Sekunden liegen. Bei der Nachbearbeitung kann ein Fräsvorgang mehr als 50, 60 oder 70 mal wiederholt werden, bevor die Elektrode bzw. die Elektrodenkappe ausgetauscht wird.

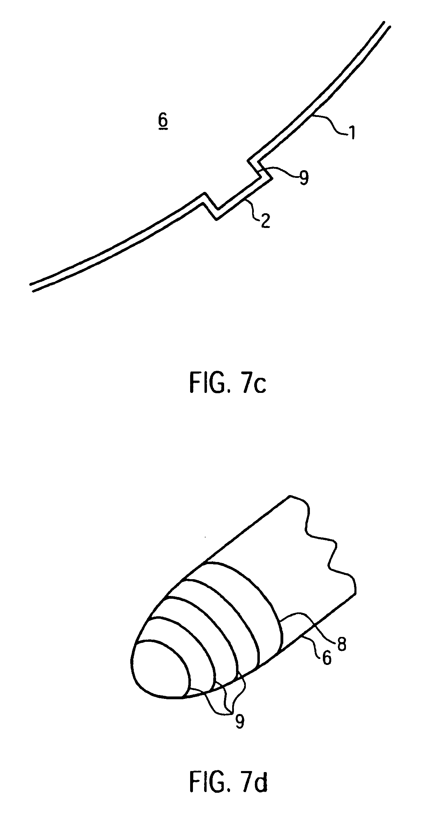

In Fig. 7c ist in einer Vergrößerung dargestellt, wie ein Wulst 9 in einer Aussparung 2 der Fräskante 1 entsteht. Durch den Wulst 9 wird die Schweißelektrode 6 geführt, so dass ein sehr gleichmäßiges Fräsergebnis erzielt wird, bei dem auch bei einem leichten Verwackeln zwischen der Elektrode und dem Fräswerkzeug kein ungleichmäßiger Materialabtrag erfolgt.

Weiter führt der Wulst zu einem abgebremsten Materialabtrag, da die Fräskanten nicht mit der gesamten Kraft auf der Elektrode aufliegen, da ein Teil der Kraft durch Wulst und Aussparung abgefangen wird, dort aber ein Befräsen weniger stark stattfindet.

Fig. 7d zeigt eine Elektrode 6 mit ringförmig angeordneten Wülsten 9. Je nachdem, wie weit die Wülste von z.B. einer Markierung 8 entfernt sind kann mit bloßen Auge darauf geschlossen werden, wie weit die Elektrode bzw. Elektrodenkappe bereits abgenutzt ist.

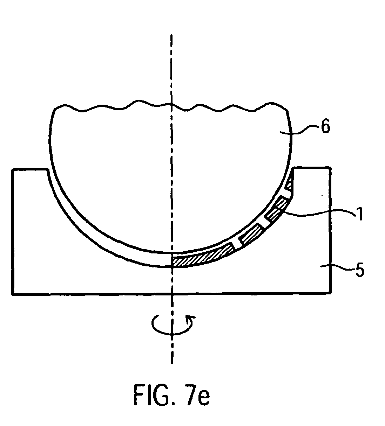

In Fig. 7e ist analog zu Fig. 7b, wobei jedoch der sichtbare Teil der Aussparungen 2 bis zur Oberfläche der Aufnahmepfanne 5 reicht. Es ist möglich, dass die Aussparungen 2 entweder bündig mit der Oberfläche der Aufnahmepfanne 5 abschließen, oder dass sich ein Teil des Volumens der Aussparungen 2 unterhalb der Oberfläche der Aufnahmepfanne 5 befindet. In beiden Fällen führt die Anordnung der einzelnen Elemente nach Fig. 7e jedoch dazu, dass die Spitzen von zu bearbeitenden Punktschweißelektroden 6 im Bereich bzw. nahe der Aussparungen 2 auf der Aufnahmepfanne 5 aufliegen. Dadurch ist es möglich den E-lektrodenmaterialabtrag bei einem Fräsvorgang weiter zu verringern.

## Patentansprüche

1. Elektrodenfräswerkzeug zum Bearbeiten von Punktschweißelektroden (6), das Elektrodenfräswerkzeug umfassend:
eine oder mehrere Fräskanten (1); wobei zumindest eine der Fräskanten an einer oder mehreren Stellen durch eine oder mehrere Aussparungen (2) unterbrochen ist,
**dadurch gekennzeichnet, dass** das Elektroden fräswerkzeug weiter
eine Aufnahmepfanne (5) zur Führung einer zu bearbeitenden Punktschweißeiektrode (6) umfasst, wobei die eine oder mehrere Fräskanten (1) an oder in der Aufnahmepfanne befestigt sind,
wobei wenigstens eine Aussparung (2) teilweise unterhalb der Oberfläche der Aufnahmepfanne (5) liegt, sodass zu bearbeitende Punktschweißelektroden (6) im Bereich der wenigstens einen Aussparung (2) auf der Aufnahmepfanne (5) aufliegen.

2. Elektrodenfräswerkzeug nach Anspruch 1, wobei die Breite der Aussparungen (2) im Bereich oberhalb von einem Minimalwert von 30 µm, 40 µm, 50 µm, 60 µm, 70 µm, 80 µm, 90 µm, 100 µm, 200 µm, 400 µm, 800 µm oder 1200 µm und/oder unterhalb von einem Maximalwert von 40 µm, 50 µm, 60 µm, 70 µm, 80 µm, 90 µm, 100 µm, 110 µm, 220 µm, 440 µm, 880 µm oder 1400 µm liegt; und/oder
wobei die Tiefe der Aussparungen (2) im Bereich oberhalb von einem Minimalwert von 30 µm, 40 µm, 50 µm, 60 µm, 70 µm, 80 µm, 90 µm, 100 µm, 150 µm, 200 µm, 250 µm oder 300 µm und/oder unterhalb von einem Maximalwert von 40 µm, 50 µm, 60 µm, 70 µm, 80 µm, 90 µm, 100 µm, 110 µm, 200 µm, 250 µm, 300 µm oder 400 µm liegt; und/oder
wobei der Abstand zwischen benachbarten Aussparungen (2) im Bereich von oberhalb von einem Minimalwert von 0,5 mm, 1 mm, 2 mm, 3 mm, 4 mm, 5 mm, 6 mm, 7 mm, 8 mm oder 9 mm und/oder unterhalb von einem Maximalwert von 1 mm, 2 mm, 3 mm, 4 mm, 5 mm, 6 mm, 7 mm, 8 mm, 9 mm oder 10 mm liegt.

3. Elektrodenfräswerkzeug nach einem der Ansprüche 1 oder 2, wobei alle Aussparungen (2) einer Fräskante (1) die gleichen Abmessungen besitzen, oder wenigstens eine Aussparung unterschiedliche Abmessungen aufweist als eine andere Aussparung; und/oder
wobei die Abstände zwischen benachbarten Aussparungen (2) jeweils gleich sind, oder die Abstände zumindest teilweise unterschiedlich sind; und/oder
wobei die Anzahl der Aussparungen (2) pro Fräskante (1) mehr, weniger oder gleich 1, 2, 3, 4, 5, 6, 7 oder 8 beträgt.

4. Elektrodenfräswerkzeug nach einem der Ansprüche 1 bis 3, wobei sich im der Rotationsachse zugewandten Teil (7) der Fräskante (1) keine Aussparungen (2) befinden.

5. Elektrodenfräswerkzeug nach einem der Ansprüche 1 bis 4, wobei alle Fräskanten (1) gleiche Aussparungen (2) mit gleichen Abständen aufweisen; oder
wobei verschiedene Fräskanten (1) Aussparungen (2) an zumindest teilweise unterschiedlichen Stellen aufweisen; und/oder
wobei nur manche Fräskanten (1) mit Aussparungen (2) versehen sind.

6. Elektrodenfräswerkzeug nach einem der Ansprüche 1 bis 5, wobei die Aussparungen (2) derart gestaltet sind, dass ein die Fräskante (1) umfassendes Fräselement komplett unterbrochen wird.

7. Elektrodenfräswerkzeug nach einem der Ansprüche 1 bis 6, wobei mindestens 10%, 20%, 30%, 40%, 50%, 60%, 70% oder 80% und/oder höchstens 20%, 30%, 40%. 50%, 60%, 70%, 80% oder 90% des Volumens der wenigstens einen Aussparung (2) unterhalb der Oberfläche der Aufnahmepfanne (5) liegt.

8. Elektrodenfräswerkzeug nach einem der Ansprüche 1 bis 7, wobei alle Aussparungen einer Fräskante (1) teilweise unterhalb der Oberfläche der Aufnahmepfanne (5) liegen.

9. Elektrodenfräswerkzeug nach einem der Ansprüche 1 bis 8, wobei wenigstens eine Aussparung (2) derart ausgebildet ist, dass der untere Bereich der wenigstens einen Aussparung (2) mit der Oberfläche der Aufnahmepfanne (5) eine nahezu lückenlose Ebene bildet.

10. Elektrodenfräswerkzeug nach einem der Ansprüche 1 bis 9, wobei die Aussparungen einen rechteckigen, abgerundete oder halbrunden Querschnitt aufweisen.

11. Elektrodenfräswerkzeug nach einem der Ansprüche 1 bis 10, wobei eine oder mehrere Aussparungen (2) abgerundete und/oder gebrochene Kanten aufweisen.

12. Fräseinrichtung zum Nachbearbeiten von Punktschweißelektroden (6), die Fräseinrichtung umfassend:
ein Elektrodenfräswerkzeug nach den Ansprüchen 1 bis 11; und
einen Antriebsmotor mit eventuell einem Getriebe für 200 bis 700 Umdrehungen pro Minute des Elektrodenfräswerkzeugs und/oder einer Motorleistung von 0,3 bis 2 kW.

## Claims

1. Electrode milling cutter for processing spot welding electrodes (6), the electrode milling cutter comprising:
one or a plurality of milling edges (1), wherein at least one of the milling edges is interrupted by one or a plurality of recesses (2) at one or a plurality of points,
**characterised in that** the electrode milling cutter also comprises a receiving socket (5) for guiding a spot welding electrode (6) to be processed, wherein the one or a plurality of milling edges (1) are fastened on or in the receiving socket,
wherein at least one recess (2) is partially below the surface of the receiving socket (5), so that spot welding electrodes (6) to be processed rest on the receiving socket (5) in the vicinity of the at least one recess (2).

2. Electrode milling cutter according to claim 1, wherein the width of the recesses (2) is in the range above a minimum value of 30 µm, 40 µm, 50 µm, 60 µm, 70 µm, 80 µm, 90 µm, 100 µm, 200 µm, 400 µm, 800 µm or 1200 µm and/or below a maximum value of 40 µm, 50 µm, 60 µm, 70 µm, 80 µm, 90 µm, 100 µm, 110 µm, 220 µm, 440 µm, 880 µm or 1400 µm; and/or
wherein the depth of the recesses (2) is in the range above a minimum value of 30 µm, 40 µm, 50 µm, 60 µm, 70 µm, 80 µm, 90 µm, 100 µm, 150 µm, 200 µm, 250 µm or 300 µm and/or below a maximum value of 40 µm, 50 µm, 60 µm, 70 µm, 80 µm, 90 µm, 100 µm, 110 µm, 200 µm, 250 µm, 300 µm or 400 µm; and/or
wherein the distance between adjacent recesses (2) is in the range above a minimum value of 0.5 mm, 1 mm, 2 mm, 3 mm, 4 mm, 5 mm, 6 mm, 7 mm, 8 mm or 9 mm and/or below a maximum value of 1 mm, 2 mm, 3 mm, 4 mm, 5 mm, 6 mm, 7 mm, 8 mm, 9 mm or 10 mm.

3. Electrode milling cutter according to any one of claims 1 or 2, wherein all recesses (2) of a milling edge (1) have the same dimensions, or at least one recess comprises different dimensions to another recess; and/or
wherein the distances between adjacent recesses (2) are identical in each case, or the distances are at least partially different; and/or
wherein the number of recesses (2) per milling edge (1) is more, less or equal to 1, 2, 3, 4, 5, 6, 7 or 8.

4. Electrode milling cutter according to any one of claims 1 to 3, wherein there are no recesses (2) in the part (7) facing the rotation axis of the milling edge (1).

5. Electrode milling cutter according to any one of claims 1 to 4, wherein all milling edges (1) comprise equal recesses (2) with equal distances; or
wherein different milling edges (1) comprise recesses (2) at at least partially different points; and/or
wherein only some milling edges (1) are provided with recesses (2).

6. Electrode milling cutter according to any one of claims 1 to 5, wherein the recesses (2) are configured in such a manner that a milling element comprising the milling edge (1) is completely interrupted.

7. Electrode milling cutter according to any one of claims 1 to 6, wherein at least 10%, 20%, 30%, 40%, 50%, 60%, 70% or 80% and/or at most 20%, 30%, 40%, 50%, 60%, 70%, 80% or 90% of the volume of the at least one recess (2) is below the surface of the receiving socket (5).

8. Electrode milling cutter according to any one of claims 1 to 7, wherein all recesses of a milling edge (1) are partially below the surface of the receiving socket (5).

9. Electrode milling cutter according to any one of claims 1 to 8, wherein at least one recess (2) is designed in such a manner that the lower region of the at least one recess (2) forms an almost complete plane with the surface of the receiving socket (5).

10. Electrode milling cutter according to any one of claims 1 to 9, wherein the recesses comprise a rectangular, rounded or semicircular cross section.

11. Electrode milling cutter according to any one of claims 1 to 10, wherein one or a plurality of recesses (2) comprise rounded and/or broken edges.

12. Milling device for reprocessing spot welding electrodes (6), the milling device comprising:
an electrode milling cutter according to claims 1 to 11; and
a drive motor with possibly a gearbox for 200 to 700 rpm of the electrode milling cutter and/or a motor output of 0.3 to 2 kW.

## Revendications

1. Outil à fraiser les électrodes pour traiter des électrodes de soudage par points (6), l'outil à fraiser les électrodes comprenant :
une ou plusieurs arêtes de fraisage (1) ; étant précisé que l'une au moins des arêtes de fraisage est interrompue à un ou plusieurs endroits par un ou plusieurs creux (2),
**caractérisé en ce que** l'outil à fraiser les électrodes comprend également une cavité de réception (5) pour guider une électrode de soudage par points (6) à traiter, étant précisé que l'arête ou les arêtes de fraisage (1) sont fixées à ou dans la cavité de réception,
et qu'au moins un creux (2) se trouve en partie au-dessous de la surface de la cavité de réception (5), de sorte que les électrodes de soudage par points (6) à traiter sont posées sur la cavité de réception (5) dans la zone du ou des creux (2).

2. Outil à fraiser les électrodes selon la revendication 1, étant précisé que la largeur des creux (2) est située dans la zone au-dessus d'une valeur minimale de 3 0 µm, 4 0 µm, 5 0 µm, 6 0 µm, 7 0 µm, 8 0 µm, 90 µm, 10 0 µm, 200 µm, 400 µm, 800 µm ou 1200 µm et/ou au-dessous d'une valeur maximale de 40 µm, 50 µm, 60 µm, 70 µm, 80 µm, 90 µm, 100 µm, 110 µm, 220 µm, 440 µm, 880 µm ou 1400 µm ; et/ou
que la profondeur des creux (2) est située dans la zone au-dessus d'une valeur minimale de 30 µm, 40 µm, 50 µm, 60 µm, 70 µm, 80 µm, 90 µm, 100 µm, 150 µm, 200 µm, 250 µm ou 300 µm, et/ou au-dessous d'une valeur maximale de 40 µm, 50 µm, 60 µm, 70 µm, 80 µm, 90 µm, 100 µm, 110 µm, 200 µm, 250 µm, 300 µm ou 400 µm ; et/ou
que la distance entre des creux (2) voisins est située dans la zone au-dessus d'une valeur minimale de 0,5 mm, 1 mm, 2 mm, 3 mm, 4 mm, 5 mm, 6 mm, 7 mm, 8 mm ou 9 mm et/ou au-dessous d'une valeur maximale de 1 mm, 2 mm, 3 mm, 4 mm, 5 mm, 6 mm, 7 mm, 8 mm, 9 mm ou 10 mm.

3. Outil à fraiser les électrodes selon l'une des revendications 1 ou 2, étant précisé que tous les creux (2) d'une arête de fraisage (1) ont les mêmes dimensions, ou au moins un creux présente des dimensions différentes de celle d'un autre creux ; et/ou
que les distances entre des creux (2) voisins sont égales, ou que ces distances sont au moins en partie différentes ; et/ou
que le nombre de creux (2) par arête de fraisage (1) est supérieur, inférieur ou égal à 1, 2, 3, 4, 5, 6, 7 ou 8.

4. Outil à fraiser les électrodes selon l'une des revendications 1 à 3, étant précisé que dans la partie (7) de l'arête de fraisage (1) tournée vers l'axe de rotation, il n'y a pas de creux (2).

5. Outil à fraiser les électrodes selon l'une des revendications 1 à 4, étant précisé que toutes les arêtes de fraisage (1) présentent les mêmes creux (2) avec les mêmes distances ; ou
que différentes arêtes de fraisage (1) présentent des creux (2) à des endroits au moins en partie différents ; et/ou
que seules quelques arêtes de fraisage (1) sont pourvues de creux (2).

6. Outil à fraiser les électrodes selon l'une des revendications 1 à 5, étant précisé que les creux (2) sont conçus de telle sorte qu'un élément de fraisage comprenant l'arête de fraisage (1) est complètement interrompu.

7. Outil à fraiser les électrodes selon l'une des revendications 1 à 6, étant précisé qu'au minimum 10%, 20%, 30%, 40%, 50%, 60%, 70% ou 80% et/ou au maximum 20%, 30%, 40%, 50%, 60%, 70%, 80% ou 90% du volume du ou des creux (2) se trouvent au-dessous de la surface de la cavité de réception (5).

8. Outil à fraiser les électrodes selon l'une des revendications 1 à 7, étant précisé que tous les creux d'une arête de fraisage (1) se trouvent en partie au-dessous de la surface de la cavité de réception (5).

9. Outil à fraiser les électrodes selon l'une des revendications 1 à 8, étant précisé qu'au moins un creux (2) est conçu pour que sa zone inférieure forme avec la surface de la cavité de réception (5) un plan presque sans interstice.

10. Outil à fraiser les électrodes selon l'une des revendications 1 à 9, étant précisé que les creux présentent une section transversale rectangulaire, arrondie ou demi-ronde.

11. Outil à fraiser les électrodes selon l'une des revendications 1 à 10, étant précisé qu'un ou plusieurs creux (2) présentent des arêtes arrondies et/ou brisées.

12. Dispositif de fraisage pour la reprise d'électrodes de soudage par points (6), le dispositif de fraisage comprenant :
un outil à fraiser les électrodes selon les revendications 1 à 11 ; et
un moteur d'entraînement avec éventuellement une transmission pour 200 à 700 tours par minute de l'outil à fraiser les électrodes et/ou une puissance de moteur de 0,3 à 2 kW.
